# EUROPEAN PATENT APPLICATION

(11) **EP 3 537 315 A1**
(43) Date of publication of application: **11.09.2019**
(21) Application number: 17876996.4
(22) Date of filing: 24.03.2017
(51) Int. Cl.: G06F 17/30

(54) **APPLICATION SEARCH METHOD AND TERMINAL**

(30) Priority: 30.11.2016 CN 201611083502
(71) Applicant: Huawei Technologies Co., Ltd., Longgang District Shenzhen, Guangdong 518129 (CN)
(72) Inventor: WANG, Zaishang, Shenzhen, Guangdong 518129 (CN)
(74) Representative: Maiwald Patent- und Rechtsanwaltsgesellschaft mbH
(86) International application number: PCT/CN2017/078117
(87) International publication number: WO 2018/098944

(57) **Abstract**

This application provides an application program search method and a terminal. When a first folder is triggered, a second folder or an icon of a first application program, or a second folder and an icon of a first application program, and an icon of an application program included in the first folder are displayed on a same display interface. It can be ensured that another folder or application program is additionally displayed when the icon of the application program included in the first folder is displayed. Therefore, user operations in querying for an application program are reduced, and a problem that an application program query operation is complex is resolved.

## Description

This application claims priority to Chinese Patent Application No. 201611083502.0, filed with the Chinese Patent Office on November 30, 2016 and entitled "APPLICATION PROGRAM SEARCH METHOD AND TERMINAL", which is incorporated herein by reference in its entirety.

### TECHNICAL FIELD

This application relates to the field of data processing technologies, and more specifically, to an application program search technology.

### BACKGROUND

Currently, performance of electronic devices such as computers and touchscreen terminals is increasingly high, and a quantity of application programs is also increasing. In an actual application, as a user installs more application programs in an electronic device, icons of application programs are densely displayed on a display interface of the electronic device.

To save space of the display interface of the electronic device, in the prior art, a folder is usually used to store icons of a plurality of application programs. For example, the icons of the application programs are classified based on types of the application programs, and icons of application programs of a same type are placed in a same folder.

However, the method of reorganizing icons of application programs by using a folder brings about a new problem. When the user searches for an application program, the operation is relatively complex. To find a desired application program, the user may need to perform a plurality of tap operations for entering and exiting a folder.

### SUMMARY

In view of this, this application provides an application program search method and a terminal to resolve a problem that an application program search operation is complex because icons of application programs are placed in a folder for storage in the prior art.

To achieve the foregoing objective, the following solutions are provided:
A first aspect of this application provides an application program search method, including the following steps: displaying a first folder on a first display interface; and when the first folder is triggered, switching from the first display interface to a second display interface, where an icon of an application program included in the first folder and a second folder are displayed on the second display interface, or an icon of an application program included in the first folder and an icon of a first application program are displayed on the second display interface, or an icon of an application program included in the first folder, a second folder, and an icon of a first application program are displayed on the second display interface, where the first application program is any application program not included in the first folder.

As can be learned from the foregoing process, when the first folder is triggered, the second folder or the icon of the first application program, or the second folder and the icon of the first application program, and the icon of the application program included in the first folder are displayed on the same display interface. It can be ensured that another folder or application program is additionally displayed when the icon of the application program included in the first folder is displayed. Therefore, user operations in querying for an application program are reduced, and a problem that an application program query operation is complex is resolved.

In an implementation, the second folder is a folder associated with the first folder or is a folder other than the first folder among folders displayed on the first display interface; and the first application program is an application program associated with the first folder or is an application program displayed on the first display interface.

In an implementation, an association relationship between the first folder and the second folder is established based on attributes of the folders or order of use of the folders; and an association relationship between the first folder and the first application program is established based on attributes of the folder and the application program or order of use of the folder and the application program.

In an implementation, a manner of establishing the association relationship between the first folder and the second folder based on order of use of the folders or establishing the association relationship between the first folder and the first application program includes: sorting folders and application programs in a preset first list in descending order or ascending order of use frequency of the folders and the application programs to obtain a first list; and obtaining, after sorting based on use frequency and use time of folders and application programs, a second list of folders and application programs used in each preset time period, where sorting order of the folders and the application programs in the second list corresponding to each time period satisfies first order, and the first order is descending order or ascending order of use frequency of the folders and the application programs; where a position relationship between the folders and the application programs in the first list and a position relationship between the folders and the application programs in the second list are both used to indicate association relationships between the folders or between the folders and the application programs.

In an implementation, a manner of establishing the association relationship between the first folder and the second folder based on order of use of the folders or establishing the association relationship between the first folder and the first application program includes: obtaining a first chart, where the first chart includes folders and application programs, and weighted values between every two folders, between every two application programs, and between one folder and one application program are all infinite; and performing training on the weighted values between every two folders, between every two application programs, and between one folder and one application program in the first chart by using a preset algorithm and by using a quantity of use times, use time, and order of use of folders and application programs in a preset time period as input parameters, to obtain a second chart; where weighted values between every two folders, between every two application programs, and between one folder and one application program in the second chart are used to indicate association relationships between the folders or between the folders and the application programs.

In an implementation, a manner of obtaining the second folder or the first application program, or the second folder and the first application program displayed on the second display interface includes: determining whether the first folder is associated with any folder or application program, or associated with any folder and application program; and if determining that the first folder is associated with a folder or an application program or associated with a folder and an application program, obtaining the folder or the application program associated with the first folder or the folder and the application program associated therewith, where the second folder is the folder associated with the first folder, and the first application program is the application program associated with the first folder; or if determining that the first folder is not associated with any folder or application program or not associated with any folder and application program, detecting whether any folder or application program or folder and application program are displayed on the first display interface; and if detecting that a folder or an application program or a folder and an application program are displayed on the first display interface, obtaining the folder or the application program or the folder and the application program displayed on the first display interface, where the second folder is the folder displayed on the first display interface, and the first application program is the application program displayed on the first display interface.

In an implementation, a manner of obtaining the second folder or the first application program, or the second folder and the first application program displayed on the second display interface includes: detecting whether any folder or application program or folder and application program are displayed on the first display interface; and if detecting that a folder or an application program or a folder and an application program are displayed on the first display interface, obtaining the folder or the application program or the folder and the application program displayed on the first display interface, where the second folder is the folder displayed on the first display interface, and the first application program is the application program displayed on the first display interface; or if detecting that no folder is displayed, or no application program is displayed, or no folder and application program are displayed on the first display interface, determining whether the first folder is associated with any folder or application program or associated with any folder and application program; and if determining that the first folder is associated with a folder, or associated with an application program, or associated with a folder and an application program, obtaining the folder or the application program associated with the first folder or the folder and the application program associated therewith, where the second folder is the folder associated with the first folder, and the first application program is the application program associated with the first folder.

In an implementation, a manner of determining whether the first folder is associated with any folder or application program or associated with any folder and application program includes: searching a prestored first list to obtain folders or application programs in positions before and after the first folder in the first list; obtaining, based on use time of the first folder, a second list corresponding to the use time of the first folder; determining whether the second list includes a name of the first folder; and if determining that the second list does not include the name of the first folder, using the folders or the application programs in the positions before and after the first folder in the first list as folders or application programs associated with the first folder or as folders and application programs associated therewith; or if determining that the second list includes the name of the first folder, obtaining folders or application programs in positions before and after the first folder in the second list; determining whether the folders or the application programs in the positions before and after the first folder in the second list and the folders or the application programs in the positions before and after the first folder in the second list include any same folder or application program; and if determining that the folders or the application programs in the positions before and after the first folder in the second list and the folders or the application programs in the positions before and after the first folder in the first list do not include any same folder or application program, determining that the first folder is not associated with any folder or application program or not associated with any folder and application program; or if determining that the folders or the application programs in the positions before and after the first folder in the second list and the folders or the application programs in the positions before and after the first folder in the first list include a same folder or application program, using the same folder and application program as a folder or an application program associated with the first folder or as a folder and an application program associated therewith.

In an implementation, a manner of determining whether the first folder is associated with any folder or application program or associated with any folder and application program includes: searching a prestored chart; determining whether a weighted value between the first folder and any folder or application program or folder and application program in the chart is less than a threshold; and if determining that a weighted value between the first folder and a folder or an application program in the chart is less than the threshold, using the folder or the application program whose weighted value with the first folder is less than the threshold in the chart as a folder or an application program associated with the first folder; or if determining that a weighted value between the first folder and none of folders or application programs in the chart is less than the threshold, determining that the first folder is not associated with any folder or application program.

In an implementation, the method further includes: when a trigger operation is input on the second display interface, switching from the second display interface to a third display interface; where when the trigger operation is used to trigger the application program included in the first folder or the first application program, the third display interface is a start interface of the triggered application program, or when the trigger operation is used to trigger the second folder, an icon of an application program included in the second folder is displayed on the third display interface.

In an implementation, the method further includes: when a trigger operation is input in a blank area on the second display interface or a return key is triggered, switching from the second display interface to the first display interface.

A second aspect of this application discloses a terminal, including: a display screen, configured to display a display interface; a memory, configured to store an instruction; and a processor, configured to implement the following functions by running a program in the memory:
displaying a first folder on a first display interface displayed on the display screen; and when the first folder is triggered, switching from the first display interface displayed on the display screen to a second display interface, where an icon of an application program included in the first folder and a second folder are displayed on the second display interface, or an icon of an application program included in the first folder and an icon of a first application are displayed on the second display interface, or an icon of an application program included in the first folder, a second folder, and a first application program are displayed on the second display interface, where the first application program is any application program not included in the first folder.

The processor disclosed in the second aspect of this application may be further configured to execute the solution in each implementation of the first aspect. For a specific execution process of the processor, refer to content in each implementation of the first aspect. Details are not described again herein.

A third aspect of this application discloses a terminal, including: an output unit, configured to output a first display interface, where a first folder is displayed on the first display interface; and a processing unit, configured to switch from the first display interface to a second display interface when the first folder is triggered, where an icon of an application program included in the first folder and a second folder are displayed on the second display interface, or an icon of an application program included in the first folder and an icon of a first application program are displayed on the second display interface, or an icon of an application program included in the first folder, a second folder, and an icon of a first application program are displayed on the second display interface, where the first application program is any application program not included in the first folder; and the output unit is further configured to output the second display unit.

The processing unit disclosed in the third aspect of this application may be further configured to execute the solution in each implementation of the first aspect. For a specific execution process of the processing unit, refer to content in each implementation of the first aspect. Details are not described again herein.

### BRIEF DESCRIPTION OF DRAWINGS

FIG. 1 is a flowchart of an application program search method according to an embodiment of this application;
FIG. 2(a) to FIG. 2(e) are respectively display diagrams of different display interfaces according to an embodiment of this application;
FIG. 3 is a flowchart of an application program search method according to an embodiment of this application;
FIG. 4 is a flowchart of an application program search method according to an embodiment of this application;
FIG. 5(a) to FIG. 5(e) are respectively display diagrams of different display interfaces according to an embodiment of this application;
FIG. 6(a) and FIG. 6(b) are respectively display diagrams of different display interfaces according to an embodiment of this application;
FIG. 7 is a flowchart of an application program search method according to an embodiment of this application;
FIG. 8 is a schematic structural diagram of a terminal according to an embodiment of this application; and
FIG. 9 is a schematic modular diagram of a terminal according to an embodiment of this application.

### DESCRIPTION OF EMBODIMENTS

In the prior art, a plurality of folders may be created on a desktop of a computer, and are respectively used to store icons of application programs. When a user needs to search for an application program, the user may enter a folder for viewing by operating a mouse. If the application program that needs to be searched for is not found in the folder, the user needs to exit the folder, then enter another folder for searching, and repeat the operation of entering and exiting a folder in this way. Consequently, the user needs to perform complex operations in the application program search process.

In addition, for a touchscreen terminal, such as a mobile phone, a plurality of folders may also be created on a display interface, and are used to store icons of application programs. When a user needs to search for an application program, the user triggers a folder, and icons of application programs included in the folder are displayed on the display interface. The user may query whether the application program that needs to be searched for exists. If the application program is not found, the user needs to trigger a blank area of the display interface or a return key of the mobile phone to exit the folder, and then trigger another folder and so on to perform the search repeatedly. A complex operation problem also exists in the foregoing application program query method.

Based on this, an application program search method disclosed in an embodiment of this application may be applied to an electronic device such as a computer and a touchscreen terminal, to resolve a problem that an application program search operation is complex because icons of application programs are placed in a folder for storage.

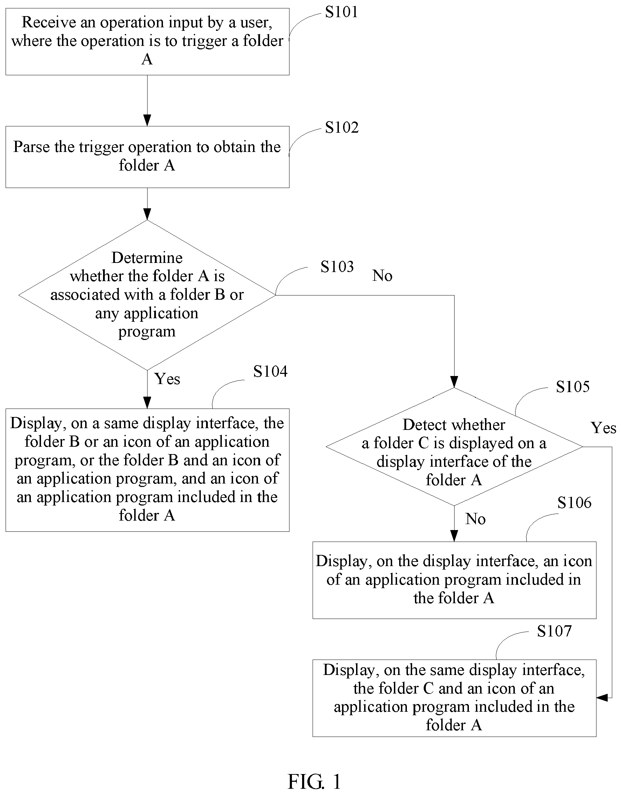

An embodiment of this application discloses an application program search method. Referring to FIG. 1, the method includes the following steps.

S101. Receive an operation input by a user, where the operation is to trigger a folder A.

The user may input the trigger operation on a desktop of a computer or a display interface of an application program of a touchscreen terminal, where the trigger operation is used to trigger a folder on the desktop of the computer or the display interface of the touchscreen terminal, and the folder triggered by the user includes icons of application programs. Therefore, the operation of triggering the folder, input by the user, may be an operation of double-clicking the folder, where the operation is input by the user on the desktop of the computer by operating a mouse, or may be an operation of tapping the folder, where the operation is input by the user on the display interface of the touchscreen terminal.

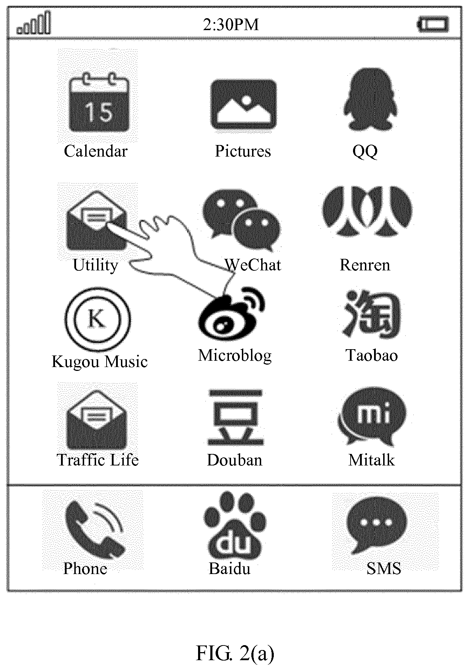

For example, referring to FIG. 2(a), a name of the folder A triggered by the user on the display interface of the application program of the touchscreen terminal is utility, and the folder includes icons of application programs of a utility type.

S102. Parse the trigger operation to obtain the folder A.

The folder A is the folder triggered by the user. Specifically, the trigger operation input by the user is parsed, and a position in which the user performs the trigger operation is determined. In addition, a correspondence between each position on the interface and an icon of an application program or a folder displayed in each position, and the folder triggered by the user is obtained.

S103. Determine whether the folder A is associated with a folder B or any application program or associated with a folder B and any application program.

If it is determined that the folder A is associated with the folder B or an application program, or the folder B and an application program, step S104 is performed; or if it is determined that the folder A is not associated with the folder B or any application program, or the folder B and any application program, step S105 to step S107 are performed. It should be noted that, the folder B associated with the folder A is also a folder including icons of application programs.

In addition, an association relationship may be established between folders or between a folder and an application program. Based on the association relationship, whether the folder A is associated with the folder B or any application program may be determined.

Specifically, an association relationship between folders or between a folder and an application program may be established based on attributes of the folder and the application program. To be specific, an association relationship exists between an application program and a folder having a same attribute or between folders having a same attribute. It should be noted that, an attribute of an application program is used to indicate a type of the application program. In addition, because application programs included in a folder are basically of a same type, an attribute of the folder indicates the type of the application programs included in the folder.

For example, a folder is social life, and the folder may include application programs of a communications type such as QQ and microblog. In addition, WeChat is also an application program of the communications type. Therefore, if the WeChat application program is displayed on the display interface, an association relationship may be established between WeChat and the social life folder. For another example, a folder is shopping life, and application programs included in the folder include application programs of a shopping type that are application programs used in life activities of people, such as Taobao and JDcom; and another folder is traffic life, and includes application programs of a road traffic type that are also application programs used in life activities of people, such as an AMAP or MyBus. Therefore, an association relationship between the two folders may be established.

In addition, it should be noted that, if all application programs included in a folder do not belong to a same type, a type to which most application programs in the folder belong, or a type of a main application program, or a type of an application program may be selected as an attribute of the folder.

In addition, an association relationship between folders or between a folder and an application program may be established based on order of use of the folders and applications. To be specific, an association relationship is established between a folder and an application program that are often used by the user consecutively.

Specifically, an implementation process of establishing an association relationship between folders or between a folder and an application program based on order of use of the folders and application programs includes the following steps.

Sill. Obtain names of folders and names of application programs.

Names of application programs installed in an electronic device and names of folders created in the electronic device and used for storing icons of application programs are obtained.

S112. Store the names of the folders and the names of the application programs based on first order as a first list.

The first order may be any preset order.

S113. Obtain a quantity of use times and use time of the folders and the application programs in a preset time period.

The preset time period may be set based on an actual situation.

S114. Sort the folders and the application programs in the first list based on second order to obtain a second list.

The second order is descending order of use frequency of the folders and the application programs, or ascending order of use frequency of the folders and the application programs.

S115. Evenly divide 24 hours into a plurality of time periods in units of preset hours.

S116. Obtain, after sorting based on the quantity of use times and the use time of the folders and the application programs, a third list of folders and application programs used in each time period.

Sorting order of the folders and the application programs in the third list corresponding to each time period satisfy third order, and the third order is descending order of use frequency of the folders and the application programs, or ascending order of use frequency of the folders and the application programs.

For example, 24 hours are divided into 12 time periods in units of two hours. Based on the use time of the folders and the application programs, quantities of use times of the folders and the application programs in each of the 12 time periods are measured, use frequency of folders and application programs used in each time period is calculated, and the folders and the application programs used in each time period are sorted based on the third order to obtain a third list in each time period.

It should be noted that, a position relationship between the folders or the application programs in the second list and a position relationship between the folders or the application programs in the third list can reflect order of folders or application programs used by the user. Therefore, this may be used to describe the association relationships between the folders or between the folders and the application programs.

Based on the foregoing process of establishing the association relationship between the folders or between the folders and the application programs, in an implementation of step S103, the step may specifically include:
S10311. Obtain use time of the folder A.

The use time of the folder A is time of triggering the folder A.

S10312. Search for a second list to obtain folders or application programs in positions before and after the folder A in the second list.

S10313. Obtain, based on the use time of the folder A, a third list corresponding to the use time.

S10314. Determine whether the third list includes a name of the folder A.

If it is determined that the third list does not include the name of the folder A, the folders or the application programs in the positions before and after the folder A in the second list are used as the folder B or application programs associated with the folder A or as the folder B and application programs associated therewith. If it is determined that the third list includes the name of the folder A, steps S10315 and S10316 are performed.

It should be noted that, folders or application programs located in adjacent positions in the second list are used by the user at approximately same frequency, and this can indicate, to some extent, that the user has used a folder or an application program and also consecutively used folders or application programs of approximately the same use frequency. Based on this, if the third list obtained in step S2012 does not include the name of the folder A, the folders or the application programs in the positions before and after the folder A in the second list are used as the folder B or application programs associated with the folder A or as the folder B and application programs associated therewith. In this way, order of use of the folders or the application programs by the user can be simulated to a large extent, and user operations in querying for an application program are reduced.

S10315. Obtain folders or application programs in positions before and after the folder A in the third list.

S10316. Determine whether the folders or the application programs in the positions before and after the folder A in the third list and the folders or the application programs in the positions before and after the folder A in the second list include any same folder or application program.

If it is determined that the folders or the application programs in the positions before and after the folder A in the third list and the folders or the application programs in the positions before and after the folder A in the second list include a same folder or application program, the same folder and application program are used as the folder B or an application program associated with the folder A or as the folder B and an application program associated therewith. If it is determined that the folders or the application programs in the positions before and after the folder A in the third list and the folders or the application programs in the positions before and after the folder A in the second list do not include any same folder or application program, it indicates that the folder A is not associated with the folder B or any application program or not associated with the folder B and any application program.

It should be noted that, in this embodiment, in step S10316, if it is determined that the third list includes the name of the folder A, the same folder and application program included in the folders or the application programs in the positions before and after the folder A in the third list and in the folders or the application programs in the positions before and after the folder A in the second list are used as the folder B or an application program associated with the folder A or as the folder B and an application program associated therewith. In this way, order of use of the folders or application programs by the user can be simulated more precisely, and a folder or an application that is more closely associated with the folder A is further provided.

It should also be noted that, another implementation process of establishing an association relationship between folders or between a folder and an application program based on order of use of the folders and application programs includes the following steps.

S121. Obtain names of folders and names of application programs.

S122. Create, by using the names of the folders and the names of the application programs, a first chart having weighted values.

Weighted values between every two folders, between every two application programs, and between one folder and one application program in the first chart are all infinite.

S122. Obtain a quantity of use times, use time, and order of use of the folders and the application programs in a preset time period.

S123. Perform training on weighted values between every two folders, between every two application programs, and between one folder and one application program in the first chart by using a preset algorithm and by using the quantity of use times, use time, and order of use of the folders and the application programs as input parameters, to obtain a second chart.

Weighted values between every two folders, between every two application programs, and between one folder and one application program in the second chart may reflect association relationships between the folders or between the folders and the application programs. Infinite weighted values indicate that no association relationship exists between every two folders, between every two application programs, and between one folder and one application program. Therefore, if weighted values between two folders, between two application programs, and between one folder and one application program are smaller, it indicates that association relationships between the two folders, between the two application programs, and between the folder and the application program are closer.

It should also be noted that the preset algorithm mentioned in this step may be understood as an algorithm similar to a neural network, for example, a utility such as TensorFlow. A specific training process in this step is not described in detail.

Based on the foregoing process of establishing the association relationship between the folders or between the folders and the application programs, in another implementation of step S103, the step may specifically include:
S10321. Search a second chart.
S10322. Determine whether a weighted value between the folder A and any folder or application program or folder and application program in the second chart is less than a threshold.

If it is determined that a weighted value between the folder A and a folder or an application program in the second chart is less than the threshold, it indicates that the folder A is associated with the folder or the application program, and the folder or the application program whose weighted value with the folder A is less than the threshold in the second chart is used as the folder B or an application program associated with the folder A. If it is determined that a weighted value between the folder A and none of folders or application programs in the second chart is less than the threshold, it indicates that the folder A is not associated with the folder B or any application program.

It should also be noted that, the threshold in this embodiment is preset. The user may set the threshold based on actual weighted values between two folders, between two application programs, and between one folder and one application program, and association relationships between the two folders, between the two application programs, and between the folder and the application program in use.

S104. Display, on a same display interface, the folder B or an icon of an application program associated with the folder A, or the folder B and an icon of an application program associated therewith, and an icon of an application program included in the folder A.

If it is determined in step S103 that the folder A is associated with the folder B or the application program or the folder B and the application program, the folder B or the application program associated with the folder A, or the folder B and the application program associated therewith are obtained, and the display interface is switched from displaying the folder A to displaying the folder B or the icon of the application program associated with the folder A, or the folder B and the icon of the application program associated therewith, and the icon of the application program included in the folder A.

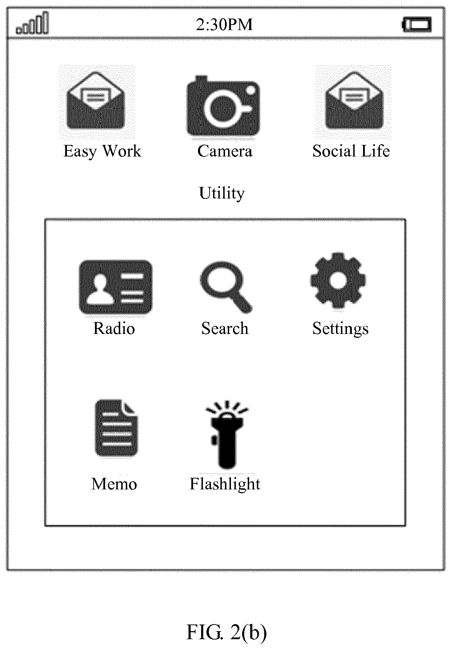

Referring to FIG. 2(b), a folder associated with the utility folder includes easy work and social life, and is associated with a camera application program. Therefore, on the interface for displaying icons of application programs such as radio, search, settings, memo, and flashlight that are included in the utility folder, the two folders easy work and social life and an icon of the camera application program are also displayed.

It should be noted that, the folder B or the application program associated with the folder A is also displayed on the display interface displaying the folder A. Therefore, the user can see, on the display interface, not only application programs included in the triggered folder, but also folders or application programs associated with the folder. If the folder A is associated with any application program, the user may search the display interface for more application programs than the application programs included in the triggered folder A. Therefore, a quantity of application programs that the user can view is increased, and further, user operations in querying for an application program are reduced, and a problem that an application program query operation is complex is resolved. In addition, if the folder A is associated with the folder B, the user may also directly trigger the folder on the display interface to further display icons of application programs included in the folder, without performing an operation of exiting the display interface of the folder A. This also reduces user operations in querying for an application program, and resolves a problem that an application program query operation is complex.

It should also be noted that, if the user performs an input operation on the display interface of the folder B or the icon of the application program associated with the folder A, or the folder B and the icon of the application program associated therewith, and the icon of the application program included in the folder A, where the operation is used to trigger the folder B associated with the folder A, for the operation, steps S101 to S104 may be further performed.

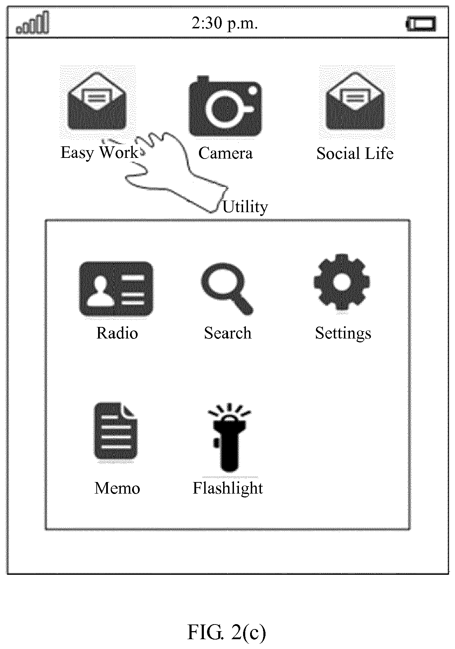

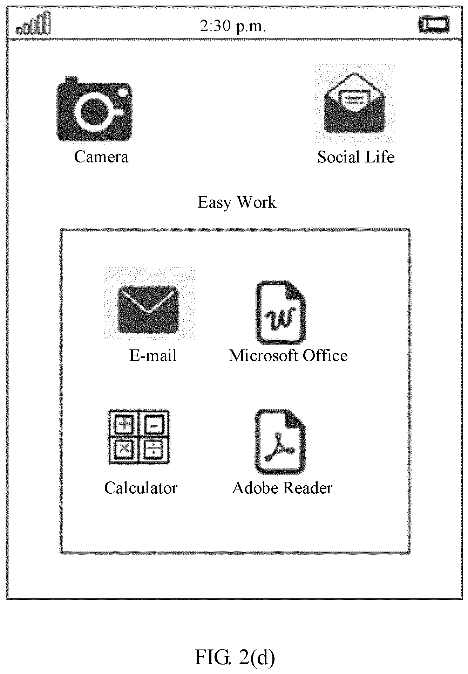

Referring to FIG. 2(c) and FIG. 2(d), the easy work folder is triggered on the display interface of the icon of the application program included in the utility folder, the two folders easy work and social life associated with the utility folder, and the icon of the camera application program associated with the utility folder. In this case, the utility folder associated with the easy work folder, the camera application program associated therewith, and the icon of the application program included in the easy work folder are displayed on another display interface.

S105. Detect whether a folder C is displayed on a display interface of the folder A.

Whether the folder C is displayed on the display interface of the folder A may be detected by using a correspondence between each position and an icon of an application program or a folder displayed in the position on the display interface.

Optionally, whether the folder C exists around the folder A on the display interface of the folder A may be detected. Certainly, whether the folder C exists in a whole area of the display interface of the folder A may be detected. If it is detected that the folder C exists around the folder A, specifically, "around the folder A" may indicate a predetermined range centered on the folder A. In addition, the folder C is also any folder including an icon of an application program.

If it is detected that the folder C does not exist on the display interface of the folder A, step S106 is performed to display the icon of the application program included in the folder A on the display interface. If it is detected that the folder C is displayed on the display interface of the folder A, step S107 is performed to display, on the same display interface, the folder C and the icon of the application program included in the folder A.

When it is detected that the folder C is displayed on the display interface of the folder A, the folder C and the icon of the application program included in the folder A are displayed on the same display interface. This may also ensure that the user can directly trigger the folder C on the display interface to further display an icon of an application program included in the folder C, without performing an operation of exiting the display interface of the folder A. This also reduces user operations in querying for an application program, and resolves a problem that an application program query operation is complex.

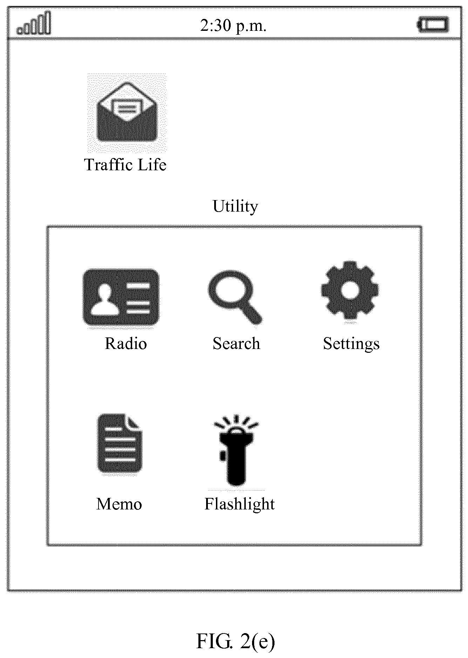

For example, referring to FIG. 2(a) and FIG. 2(e), on the display interface of the utility folder, the traffic life folder is also displayed. Therefore, after the user triggers the utility folder, if it is determined that the folder is not associated with any folder or application program, the display interface is switched from displaying the utility folder to displaying the traffic life folder and the application program included in the utility folder.

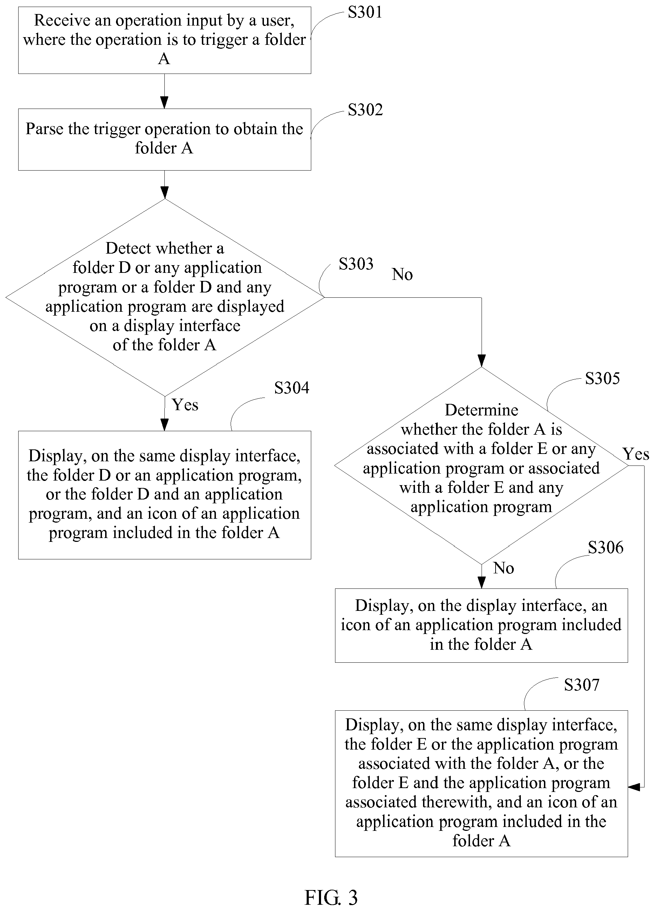

Another embodiment of this application further discloses an application program search method. Referring to FIG. 3, the method includes the following steps.

S301. Receive an operation input by a user, where the operation is to trigger a folder A.

S302. Parse the trigger operation to obtain the folder A.

S303. Detect whether a folder D or any application program or a folder D and any application program are displayed on a display interface of the folder A.

If it is detected that the folder D or an application program or the folder D and an application program are displayed on the display interface of the folder A, step S304 is performed; or if it is detected that the folder D is not displayed on the display interface of the folder A, steps S305 to S307 are performed.

S304. Display, on the same display interface, the folder D or an application program, or the folder D and an application program displayed on the display interface of the folder A, and an icon of an application program included in the folder A.

S305. Determine whether the folder A is associated with a folder E or any application program or associated with a folder E and any application program.

If it is determined that the folder A is not associated with the folder E or any application program or not associated with the folder E and any application program, step S306 is performed to display, on the display interface, an icon of an application program included in the folder A.

If it is determined that the folder A is associated with the folder E or an application program or associated with the folder E and an application program, step S307 is performed to display, on the same display interface, the folder E or the application program associated with the folder A, or the folder E and the application program associated therewith, and an icon of an application program included in the folder A.

It should be noted that, in this embodiment, for content of steps S301 and S302, reference may be made to content of steps S101 and S102 in the embodiment corresponding to FIG. 1; for content of steps S303 and S304, reference may be made to content of steps S105 and S107 in the embodiment corresponding to FIG. 1; and for content of steps S305 to S307, reference may be made to content of steps S103, S104, and S106 in the embodiment corresponding to FIG. 1.

It should also be noted that, content of step S103 in the embodiment corresponding to FIG. 1 and content of step S303 in the embodiment corresponding to FIG. 3 are two specific implementations of a step of obtaining, based on one folder, another folder or application program or another folder and application program. In addition, displaying, on a same display interface, an icon of an application program included in one folder, and another folder or an icon of an application program, or another folder and an icon of an application program can reduce user operations in querying for an application program, and further resolve a problem that an application program query operation is complex.

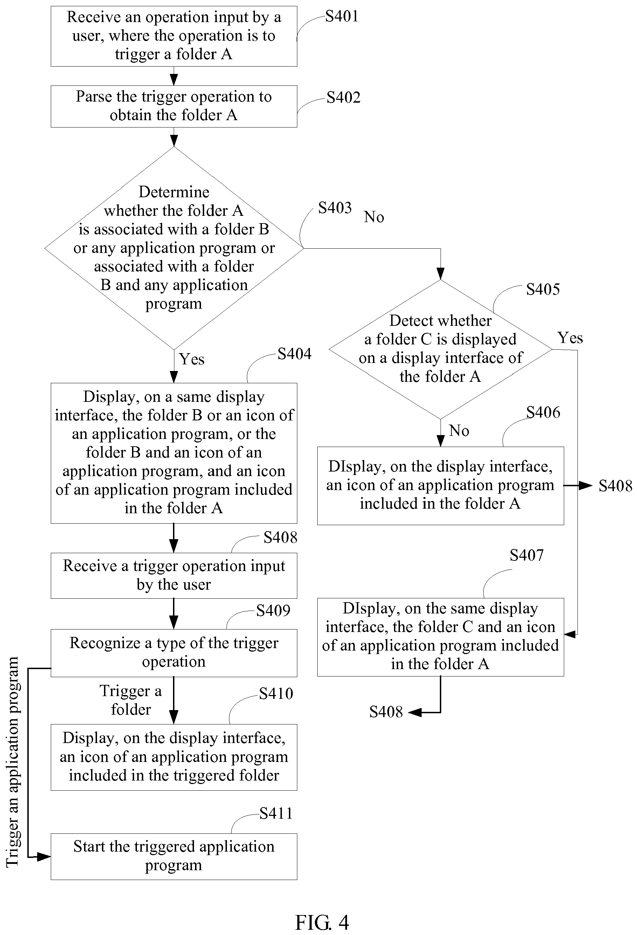

Another embodiment of this application discloses an application program search method. Referring to FIG. 4, the method includes steps S401 to S407, where content of steps S401 to S407 is the same as content of steps S101 to S107 in the embodiment corresponding to FIG. 1, and is not described again herein. In addition, after step S404, step S406, and step S407, the method further includes the following steps:
S408. Receive a trigger operation input by the user.

The trigger operation includes: an operation of triggering the folder B associated with the folder A, the application program associated with the folder A, the application program included in the folder A, or the folder C.

S409. Recognize a type of the trigger operation.

If the operation recognized in step S409 is an operation of triggering the folder B associated with the folder A, or the folder C, step S410 is performed to display, on the display interface, an icon of an application program included in the triggered folder. If the operation recognized in step S409 is an operation of triggering the application program included in the folder A or the application program associated with the folder A, step S411 is performed to start the triggered application program.

It should be noted that, a trigger operation is input on the display interface that displays the folder B or the application program associated with the folder A, or the folder B and the application program associated therewith, and the icon of the application program included in the first folder A, to trigger the folder B or the application program associated with the folder A, or the application program included in the folder A. Based on the type of the trigger operation, steps S410 and S411 are performed. In addition, a trigger operation is input on a display interface that displays only the application program included in the folder A, to trigger the application program on the interface. If a result of recognition in step S409 is an operation of triggering an application program, step S411 is performed. Furthermore, a trigger operation is input on a display interface that displays the folder C and an icon of an application program included the folder B, to trigger the folder C or the application program included in the folder B. Likewise, steps S410 and S411 are performed based on a result of recognition in step S409.

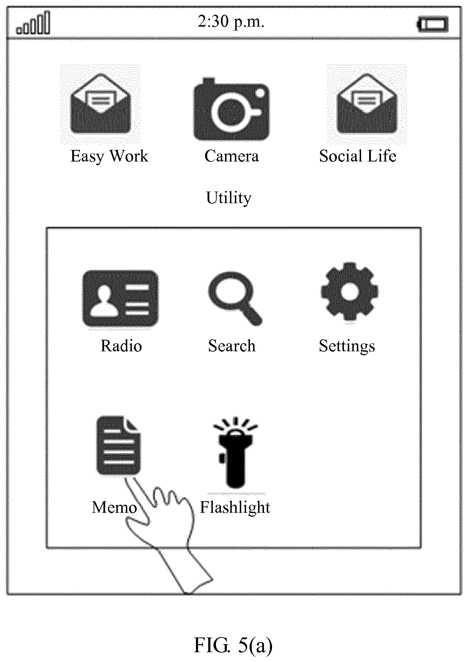

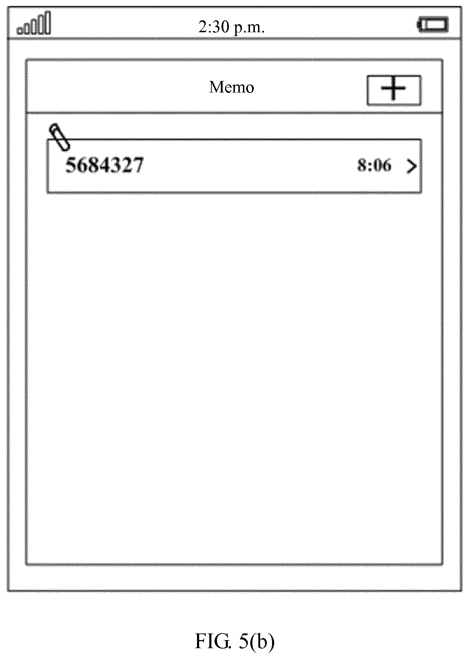

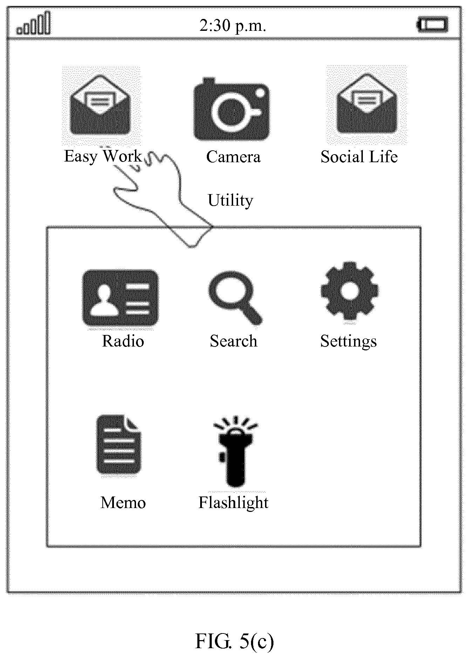

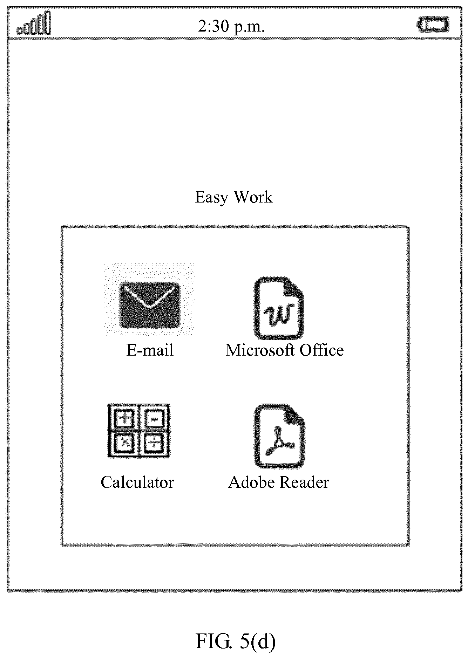

For example, referring to FIG. 5(a) and FIG. 5(b), if an operation of triggering a memo application program is input on a display interface of icons of application programs included in a utility folder A, an easy work and social life folder B, and a camera application program, the memo application program is started, and a start interface of the application program is displayed. For another example, referring to FIG. 5(c) and FIG. 5(d), if an operation of triggering an easy work folder is input on a display interface of icons of application programs included in a utility folder A, an easy work and social life folder B, and a camera application program, icons of application programs in the folder are displayed.

It should also be noted that, if an input operation is input in a blank area on a display interface that displays the folder B or the application program associated with the folder A, or the folder B and the application program associated therewith, and the icon of the application program included in the folder A, or an blank area of a display interface that displays only the application program included in the folder A, or a blank area of a display interface that displays the folder C and the icon of the application program included in the folder B, the terminal switches back from the display interface to the display interface of the folder A, where the blank area may be understood as an area that does not display any content.

In addition, if the user performs an operation of triggering a return key on any one of the foregoing display interfaces, the user may also switch back from the display interface to the display interface of the folder A.

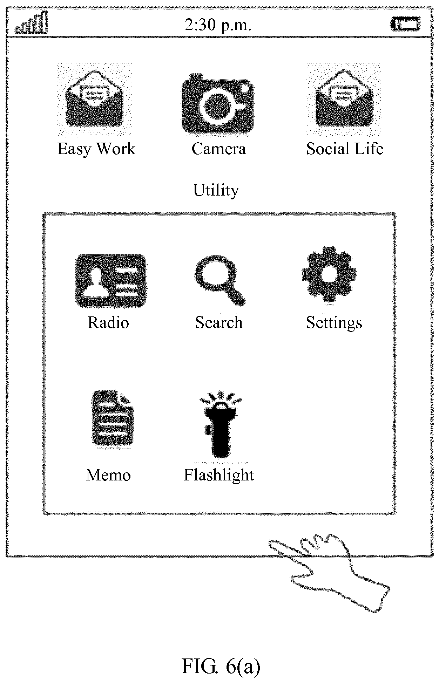

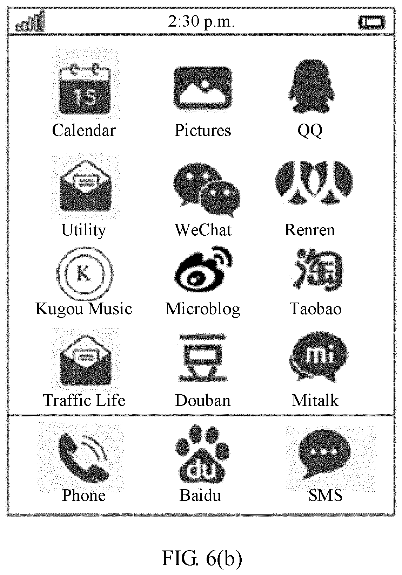

For example, referring to FIG. 6(a) and FIG. 6(b), if an operation of triggering a blank area is input on a display interface of icons of application programs included in a utility folder A, an easy work and social life folder B, and a camera application program, the terminal may switch back from the display interface to the display interface of the folder A.

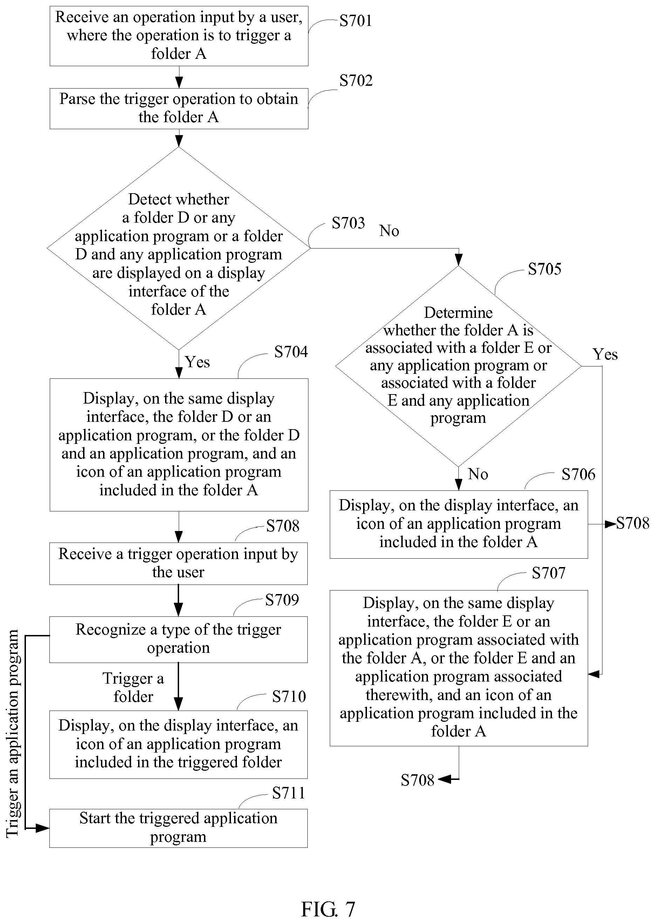

Another embodiment of this application discloses an application program search method. Referring to FIG. 7, the method includes steps S701 to S707, where content of steps S701 to S707 is the same as content of steps S301 to S307 in the embodiment corresponding to FIG. 3, and is not described again herein. In addition, after step S704, step S706, and step S707, the method further includes the following steps.

S708. Receive a trigger operation input by the user.

The trigger operation may be: an input operation of triggering the folder D or the application program included in the folder A on a display interface of the folder D or the application program, or the folder D and the application program and the icon of the application program included in the folder A; or may be an operation input on a display interface that displays only the application program included in the folder A; or may be an operation that is input on a display interface of the folder E or the application program associated with the folder A, or the folder E and the application program associated therewith, and the icon of the application program included in the folder A, and is used to trigger the application program included in the folder A, and the folder E or the application program associated with the folder A.

S709. Recognize a type of the trigger operation.

If the operation recognized in step S709 is an operation of triggering the folder E associated with the folder A, or the folder D, step S710 is performed to display, on the display interface, an icon of an application program included in the triggered folder.

If the operation recognized in step S709 is an operation of triggering the application program included in the folder A or the application program associated with the folder A, step S711 is performed to start the triggered application program.

It should also be noted that, for a specific implementation process of steps S708 to S711 in this embodiment, reference may be made to content of the method embodiment corresponding to FIG. 4. Details are not described again herein.

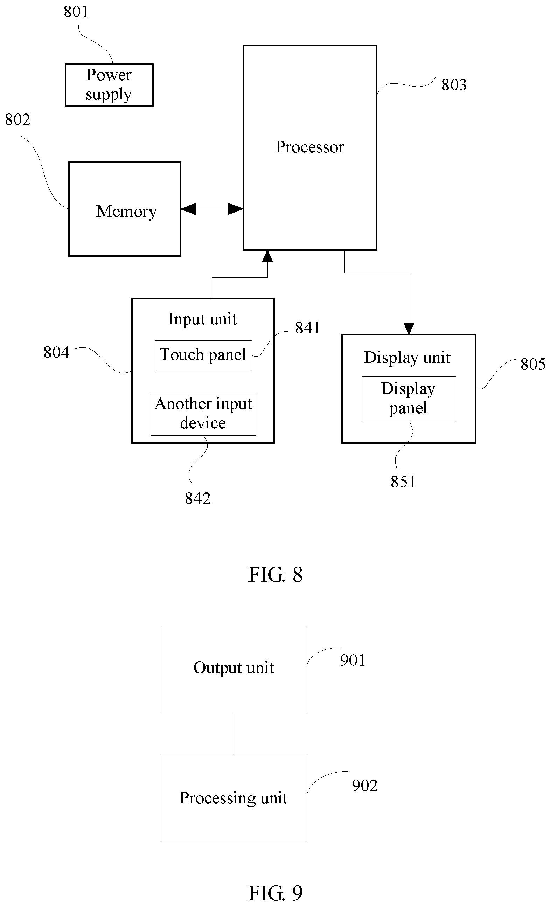

Another embodiment of this application further discloses a terminal. The terminal may be a computer, or may be a touchscreen terminal having a touchscreen for human-computer interaction, for example, a mobile phone or a tablet computer. As shown in FIG. 8, the terminal includes a power supply 801, a memory 802, a processor 803, an input unit 804, and a display unit 805, where the power supply 801 supplies power to each component in the terminal. Optionally, the power supply 801 may be further logically connected to the processor 803 through a power management system, to implement functions such as charging, discharging, and power consumption through the power management system.

The memory 802 may be configured to store a software program and module. The processor 803 executes various function applications and data processing of the terminal by running the software program and module stored in the memory 802. The memory 802 may mainly include a program storage area and a data storage area. The program storage area may store an operating system, an application program required by at least one function (such as an audio playing function or an image playing function), or the like. The data storage area may store data (such as audio data or a phone book) that is created based on usage of the terminal, or the like. In addition, the memory 802 may include a high-speed random access memory, and may further include a non-volatile memory, for example, at least one magnetic disk storage, a flash memory, or another volatile solid state memory.

The processor 803 is a control center of the terminal. The processor 803 uses various interfaces and lines to connect all parts of the terminal, and executes various functions and data processing of the terminal by running or executing the software program and/or module stored in the memory 802 and invoking data stored in the memory 802, thereby performing overall monitoring on the terminal. Optionally, the processor 803 may include one or more processing units. Preferably, the processor 803 may integrate an application processor and a modem processor. The application processor mainly processes the operating system, a user interface, an application program, and the like. The modem processor mainly processes wireless communication. It may be understood that the modem processor may not be integrated with the processor 803 either.

The input unit 804 may be configured to receive input digit or character information, and generate a key signal input related to a user setting and function control of the terminal. Specifically, if the terminal is a touchscreen terminal, the input unit 804 may include a touch panel 841 and another input device 842. The touch panel 841, also referred to as a touchscreen, may capture a touch operation of a user on or near the touch panel (for example, an operation performed by the user by using any appropriate object or accessory such as a finger or a stylus on the touch panel 841 or near the touch panel 841), and drive a corresponding connection apparatus based on a preset program. Optionally, the touch panel 841 may include two parts: a touch detection apparatus and a touch controller. The touch detection apparatus detects a touch direction of the user, detects a signal generated by the touch operation, and transmits the signal to the touch controller. The touch controller receives touch information from the touch detection apparatus, converts the touch information into touch point coordinates, and transmits the touch point coordinates to the processor 803, and can receive a command transmitted by the processor 803 and execute the command. In addition, the touch panel 841 may be implemented by using a plurality of types such as resistive, capacitive, infrared, and surface acoustic wave. In addition to the touch panel 841, the input unit 804 may further include the another input device 842. Specifically, the another input device 842 may include but is not limited to one or more of a physical keyboard, a function key (such as a volume control key or a power on/off key), a trackball, a mouse, a joystick, or the like.

The display unit 805 may be configured to display information input by the user or information provided for the user and various menus of the terminal. The display unit 805 may include a display panel 851 (also referred to as a display screen). Optionally, the display panel 851 may be configured in a form of an LCD (Liquid Crystal Display, liquid crystal display), an OLED (Organic Light-Emitting Diode, organic light-emitting diode), or the like. Further, if the terminal is a touchscreen terminal, the touch panel 841 may cover the display panel 851. When the touch panel 841 detects a touch operation on or near the touch panel 841, the touch panel 841 transmits the touch operation to the processor 803 to determine a type of a touch event. Then the processor 803 provides a corresponding visual output on the display panel 851 based on the type of the touch event. Although the touch panel 841 and the display panel 851 are used as two independent components to implement input and input functions of the touchscreen terminal in FIG. 8, the touch panel 841 and the display panel 851 may be integrated to implement input and output functions of the touchscreen terminal in some embodiments.

It should be noted that, the mobile terminal in this embodiment of the present invention may have more components than those shown in FIG. 8. Although not shown in the figure, the terminal may further include an audio frequency circuit, a speaker, a microphone, and the like. The audio frequency circuit may transmit an electrical signal converted from received audio data to the speaker, and the speaker converts the electrical signal into an audio signal for outputting. On the other hand, the microphone converts a captured audio signal into an electrical signal, and the audio frequency circuit converts the received electrical signal into audio data, and then transmits the audio data to another terminal, or outputs the audio data to the memory 802 for further processing.

In the terminal disclosed by this embodiment of this application, the processor 803 runs the program in the memory 802 to implement the following functions:
displaying a first folder on a first display interface displayed by the display unit 805; and when the first folder is triggered, switching from the first display interface displayed by the display unit 805 to a second display interface, where an icon of an application program included in the first folder and a second folder are displayed on the second display interface, or an icon of an application program included in the first folder and an icon of a first application are displayed on the second display interface, or an icon of an application program included in the first folder, a second folder, and a first application program are displayed on the second display interface, where the first application program is any application program not included in the first folder.

It should be noted that, in this embodiment, after the input unit 804 performs a trigger operation, the processor 803 runs the program in the memory 802 to display, on a same display interface, the second folder or the icon of the first application program, or the second folder and the icon of the first application program, and the icon of the application program included in the first folder. It can be ensured that another folder or application program is additionally displayed when the icon of the application program included in the first folder is displayed. Therefore, user operations in querying for an application program are reduced, and a problem that an application program query operation is complex is resolved.

Optionally, the second folder is a folder associated with the first folder or is a folder other than the first folder among folders displayed on the first display interface; and the first application program is an application program associated with the first folder or is an application program displayed on the first display interface.

Optionally, an association relationship between the first folder and the second folder is established based on attributes of the folders or order of use of the folders; and an association relationship between the first folder and the first application program is established based on attributes of the folder and the application program or order of use of the folder and the application program.

Optionally, in another embodiment of this application, a manner of establishing an association relationship between the first folder and the second folder or an association relationship between the first folder and the first application program by the processor 803 based on order of use of the folders includes:
sorting folders and application programs in a preset first list in descending order or ascending order of use frequency of the folders and the application programs to obtain a first list; and obtaining, after sorting based on use frequency and use time of folders and application programs, a second list of folders and application programs used in each preset time period, where sorting order of the folders and the application programs in the second list corresponding to each time period satisfies first order, and the first order is descending order or ascending order of use frequency of the folders and the application programs; where
a position relationship between the folders and the application programs in the first list and a position relationship between the folders and the application programs in the second list are both used to indicate association relationships between the folders or between the folders and the application programs.

In this embodiment, for a specific work process of the processor 803, refer to content of steps S111 to S116 in the method embodiment corresponding to FIG. 1. Details are not described again herein.

Optionally, in another embodiment of this application, another manner of establishing an association relationship between the first folder and the second folder or an association relationship between the first folder and the first application program by the processor 803 based on order of use of the folders includes:
obtaining a first chart, where the first chart includes folders and application programs, and weighted values between every two folders, between every two application programs, and between one folder and one application program are all infinite; and performing training on the weighted values between every two folders, between every two application programs, and between one folder and one application program in the first chart by using a preset algorithm and by using a quantity of use times, use time, and order of use of folders and application programs in a preset time period as input parameters, to obtain a second chart; where
weighted values between every two folders, between every two application programs, and between one folder and one application program in the second chart are used to indicate association relationships between the folders or between the folders and the application programs.

In this embodiment, for a specific work process of the processor 803, refer to content of steps S121 to S123 in the method embodiment corresponding to FIG. 1. Details are not described again herein.

Optionally, in another embodiment of this application, a manner of obtaining the second folder or the first application program, or the second folder and the first application program by the processor 803 includes:
determining whether the first folder is associated with any folder or application program, or associated with any folder and application program; and if determining that the first folder is associated with a folder or an application program or associated with a folder and an application program, obtaining the folder or the application program associated with the first folder or the folder and the application program associated therewith, where the second folder is the folder associated with the first folder, and the first application program is the application program associated with the first folder; or if determining that the first folder is not associated with any folder or application program or not associated with any folder and application program, detecting whether any folder or application program or folder and application program are displayed on the first display interface; and if detecting that a folder or an application program or a folder and an application program are displayed on the first display interface, obtaining the folder or the application program or the folder and the application program displayed on the first display interface, where the second folder is the folder displayed on the first display interface, and the first application program is the application program displayed on the first display interface.

In this embodiment, for a specific work process of the processor 803, refer to content of steps S101 to S107 in the method embodiment corresponding to FIG. 1. Details are not described again herein.

Optionally, in another embodiment of this application, another manner of obtaining the second folder or the first application program, or the second folder and the first application program by the processor 803 includes:
detecting whether any folder or application program or folder and application program are displayed on the first display interface; and if detecting that a folder or an application program or a folder and an application program are displayed on the first display interface, obtaining the folder or the application program or the folder and the application program displayed on the first display interface, where the second folder is the folder displayed on the first display interface, and the first application program is the application program displayed on the first display interface; or if detecting that no folder is displayed, or no application program is displayed, or no folder and application program are displayed on the first display interface, determining whether the first folder is associated with any folder or application program or associated with any folder and application program; and if determining that the first folder is associated with a folder, or associated with an application program, or associated with a folder and an application program, obtaining the folder or the application program associated with the first folder or the folder and the application program associated therewith, where the second folder is the folder associated with the first folder, and the first application program is the application program associated with the first folder.

In this embodiment, for a specific work process of the processor 803, refer to content of steps S301 to S307 in the method embodiment corresponding to FIG. 3. Details are not described again herein.

Optionally, in another embodiment of this application, a manner of determining, by the processor 803, whether the first folder is associated with any folder or application program, or associated with any folder and application program includes:
searching a prestored first list to obtain folders or application programs in positions before and after the first folder in the first list; obtaining, based on use time of the first folder, a second list corresponding to the use time of the first folder; determining whether the second list includes a name of the first folder; and if determining that the second list does not include the name of the first folder, using the folders or the application programs in the positions before and after the first folder in the first list as folders or application programs associated with the first folder or as folders and application programs associated therewith; or if determining that the second list includes the name of the first folder, obtaining folders or application programs in positions before and after the first folder in the second list; determining whether the folders or the application programs in the positions before and after the first folder in the second list and the folders or the application programs in the positions before and after the first folder in the second list include any same folder or application program; and
if determining that the folders or the application programs in the positions before and after the first folder in the second list and the folders or the application programs in the positions before and after the first folder in the first list do not include any same folder or application program, determining that the first folder is not associated with any folder or application program or not associated with any folder and application program; or if determining that the folders or the application programs in the positions before and after the first folder in the second list and the folders or the application programs in the positions before and after the first folder in the first list include a same folder or application program, using the same folder and application program as a folder or an application program associated with the first folder or as a folder and an application program associated therewith.

In this embodiment, for a specific work process of the processor 803, refer to content of steps S10311 to S10316 in the method embodiment corresponding to FIG. 1. Details are not described again herein.

Optionally, in another embodiment of this application, another manner of determining, by the processor 803, whether the first folder is associated with any folder or application program, or associated with any folder and application program includes:
searching a prestored chart; determining whether a weighted value between the first folder and any folder or application program or folder and application program in the chart is less than a threshold; and
if determining that a weighted value between the first folder and a folder or an application program in the chart is less than the threshold, using the folder or the application program whose weighted value with the first folder is less than the threshold in the chart as a folder or an application program associated with the first folder; or if determining that a weighted value between the first folder and none of folders or application programs in the chart is less than the threshold, determining that the first folder is not associated with any folder or application program.

In this embodiment, for a specific work process of the processor 803, refer to content of steps S10321 and S10322 in the method embodiment corresponding to FIG. 1. Details are not described again herein.

Optionally, in another embodiment of this application, the processor 803 is further configured to:
when a trigger operation is input on the second display interface, switch from the second display interface to a third display interface; where
when the trigger operation is used to trigger the application program included in the first folder or the first application program, the third display interface is a start interface of the triggered application program, or when the trigger operation is used to trigger the second folder, an icon of an application program included in the second folder is displayed on the third display interface.

In this embodiment, for a specific work process of the processor 803, refer to content of the method embodiment corresponding to FIG. 4 or content of the method embodiment corresponding to FIG. 5. Details are not described again herein.

Optionally, in another embodiment of this application, the processor 803 is further configured to:
when a trigger operation is input in a blank area on the second display interface or a return key is triggered, switch from the second display interface to the first display interface.

In this embodiment, for a specific work process of the processor 803, refer to content of the method embodiment corresponding to FIG. 7. Details are not described again herein.

Another embodiment of this application further discloses a terminal. Referring to FIG. 9, the terminal includes an output unit 901 and a processing unit 902.

The output unit 901 is configured to output a first display interface, where a first folder is displayed on the first display interface. The processing unit 902 is configured to switch from the first display interface to a second display interface when the first folder is triggered. The output unit 902 is further configured to output the second display unit during switching from the first display interfaces to the second display interface, where an icon of an application program included in the first folder and a second folder are displayed on the second display interface, or an icon of an application program included in the first folder and an icon of a first application program are displayed on the second display interface, or an icon of an application program included in the first folder, a second folder, and an icon of a first application program are displayed on the second display interface, where the first application program is any application program not included in the first folder.

Optionally, in another embodiment of this application, the second folder is a folder associated with the first folder or is a folder other than the first folder among folders displayed on the first display interface; and the first application program is an application program associated with the first folder or is an application program displayed on the first display interface.

Optionally, in another embodiment of this application, an association relationship between the first folder and the second folder is established based on attributes of the folders or order of use of the folders; and an association relationship between the first folder and the first application program is established based on attributes of the folder and the application program or order of use of the folder and the application program.

The processing unit 901 is further configured to establish the association relationship between the first folder and the second folder or the association relationship between the first folder and the first application program based on order of use of the folders. For a specific establishing manner, refer to content of steps S111 to S116 and content of steps S121 to S123 in the method embodiment corresponding to FIG.1. Details are not described again herein.

In addition, the processing unit 902 is further configured to determine whether the first folder is associated with any folder or application program, or associated with any folder and application program. For a specific performing process, refer to content of steps S10311 to S10316 and steps S10321 and S10322 in the method embodiment corresponding to FIG.1. Details are not described again herein.

In addition, the processing unit 902 may further perform procedures disclosed by the another method embodiment. For details, refer to content in the another method embodiment. Details are not described again herein.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer program instruction is loaded and executed on a computer, the procedures or functions according to the embodiments of this application are all or partially generated. The computer may be a general-purpose computer, a dedicated computer, a computer network, or another editable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or may be a data storage device integrating one or more usable media, such as a server or a data center. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

## Claims

1. An application program search method, comprising:
displaying a first folder on a first display interface; and
when the first folder is triggered, switching from the first display interface to a second display interface, wherein an icon of an application program comprised in the first folder and a second folder are displayed on the second display interface, or an icon of an application program comprised in the first folder and an icon of a first application program are displayed on the second display interface, or an icon of an application program comprised in the first folder, a second folder, and an icon of a first application program are displayed on the second display interface, wherein the first application program is any application program not comprised in the first folder.

2. The method according to claim 1, wherein the second folder is a folder associated with the first folder or is a folder other than the first folder among folders displayed on the first display interface; and the first application program is an application program associated with the first folder or is an application program displayed on the first display interface.

3. The method according to claim 2, wherein an association relationship between the first folder and the second folder is established based on attributes of the folders or order of use of the folders; and an association relationship between the first folder and the first application program is established based on attributes of the folder and the application program or order of use of the folder and the application program.

4. The method according to claim 3, wherein a manner of establishing the association relationship between the first folder and the second folder based on order of use of the folders or establishing the association relationship between the first folder and the first application program comprises:
sorting folders and application programs in a preset first list in descending order or ascending order of use frequency of the folders and the application programs to obtain a first list; and
obtaining, after sorting based on use frequency and use time of folders and application programs, a second list of folders and application programs used in each preset time period, wherein sorting order of the folders and the application programs in the second list corresponding to each time period satisfies first order, and the first order is descending order or ascending order of use frequency of the folders and the application programs; wherein
a position relationship between the folders and the application programs in the first list and a position relationship between the folders and the application programs in the second list are both used to indicate association relationships between the folders or between the folders and the application programs.

5. The method according to claim 3, wherein a manner of establishing the association relationship between the first folder and the second folder based on order of use of the folders or establishing the association relationship between the first folder and the first application program comprises:
obtaining a first chart, wherein the first chart comprises folders and application programs, and weighted values between every two folders, between every two application programs, and between one folder and one application program are all infinite; and
performing training on the weighted values between every two folders, between every two application programs, and between one folder and one application program in the first chart by using a preset algorithm and by using a quantity of use times, use time, and order of use of folders and application programs in a preset time period as input parameters, to obtain a second chart; wherein
weighted values between every two folders, between every two application programs, and between one folder and one application program in the second chart are used to indicate association relationships between the folders or between the folders and the application programs.

6. The method according to claim 2, wherein a manner of obtaining the second folder or the first application program, or the second folder and the first application program displayed on the second display interface comprises:
determining whether the first folder is associated with any folder or application program, or associated with any folder and application program; and
if determining that the first folder is associated with a folder or an application program or associated with a folder and an application program, obtaining the folder or the application program associated with the first folder or the folder and the application program associated therewith, wherein the second folder is the folder associated with the first folder, and the first application program is the application program associated with the first folder; or
if determining that the first folder is not associated with any folder or application program or not associated with any folder and application program, detecting whether any folder or application program or folder and application program are displayed on the first display interface; and
if detecting that a folder or an application program or a folder and an application program are displayed on the first display interface, obtaining the folder or the application program or the folder and the application program displayed on the first display interface, wherein the second folder is the folder displayed on the first display interface, and the first application program is the application program displayed on the first display interface.

7. The method according to claim 2, wherein a manner of obtaining the second folder or the first application program, or the second folder and the first application program displayed on the second display interface comprises:
detecting whether any folder or application program or folder and application program are displayed on the first display interface; and
if detecting that a folder or an application program or a folder and an application program are displayed on the first display interface, obtaining the folder or the application program or the folder and the application program displayed on the first display interface, wherein the second folder is the folder displayed on the first display interface, and the first application program is the application program displayed on the first display interface; or
if detecting that no folder is displayed, or no application program is displayed, or no folder and application program are displayed on the first display interface, determining whether the first folder is associated with any folder or application program or associated with any folder and application program; and
if determining that the first folder is associated with a folder, or associated with an application program, or associated with a folder and an application program, obtaining the folder or the application program associated with the first folder or the folder and the application program associated therewith, wherein the second folder is the folder associated with the first folder, and the first application program is the application program associated with the first folder.

8. The method according to claim 6 or 7, wherein a manner of determining whether the first folder is associated with any folder or application program or associated with any folder and application program comprises:
searching a prestored first list to obtain folders or application programs in positions before and after the first folder in the first list;
obtaining, based on use time of the first folder, a second list corresponding to the use time of the first folder;
determining whether the second list comprises a name of the first folder; and
if determining that the second list does not comprise the name of the first folder, using the folders or the application programs in the positions before and after the first folder in the first list as folders or application programs associated with the first folder or as folders and application programs associated therewith; or if determining that the second list comprises the name of the first folder, obtaining folders or application programs in positions before and after the first folder in the second list;
determining whether the folders or the application programs in the positions before and after the first folder in the second list and the folders or the application programs in the positions before and after the first folder in the second list comprise any same folder or application program; and
if determining that the folders or the application programs in the positions before and after the first folder in the second list and the folders or the application programs in the positions before and after the first folder in the first list do not comprise any same folder or application program, determining that the first folder is not associated with any folder or application program or not associated with any folder and application program; or if determining that the folders or the application programs in the positions before and after the first folder in the second list and the folders or the application programs in the positions before and after the first folder in the first list comprise a same folder or application program, using the same folder and application program as a folder or an application program associated with the first folder or as a folder and an application program associated therewith.

9. The method according to claim 6 or 7, wherein a manner of determining whether the first folder is associated with any folder or application program or associated with any folder and application program comprises:
searching a prestored chart;
determining whether a weighted value between the first folder and any folder or application program or folder and application program in the chart is less than a threshold; and
if determining that a weighted value between the first folder and a folder or an application program in the chart is less than the threshold, using the folder or the application program whose weighted value with the first folder is less than the threshold in the chart as a folder or an application program associated with the first folder; or if determining that a weighted value between the first folder and none of folders or application programs in the chart is less than the threshold, determining that the first folder is not associated with any folder or application program.

10. The method according to any one of claims 1 to 9, further comprising:
when a trigger operation is input on the second display interface, switching from the second display interface to a third display interface; wherein
when the trigger operation is used to trigger the application program comprised in the first folder or the first application program, the third display interface is a start interface of the triggered application program, or when the trigger operation is used to trigger the second folder, an icon of an application program comprised in the second folder is displayed on the third display interface.

11. The method according to any one of claims 1 to 9, further comprising:
when a trigger operation is input in a blank area on the second display interface or a return key is triggered, switching from the second display interface to the first display interface.

12. A terminal, comprising:
a display screen, configured to display a display interface;
a memory, configured to store an instruction; and
a processor, configured to implement the following functions by running a program in the memory:
displaying a first folder on a first display interface displayed on the display screen; and when the first folder is triggered, switching from the first display interface displayed on the display screen to a second display interface, wherein an icon of an application program comprised in the first folder and a second folder are displayed on the second display interface, or an icon of an application program comprised in the first folder and an icon of a first application are displayed on the second display interface, or an icon of an application program comprised in the first folder, a second folder, and a first application program are displayed on the second display interface, wherein the first application program is any application program not comprised in the first folder.

13. The terminal according to claim 12, wherein the second folder is a folder associated with the first folder or is a folder other than the first folder among folders displayed on the first display interface; and the first application program is an application program associated with the first folder or is an application program displayed on the first display interface.

14. The terminal according to claim 13, wherein an association relationship between the first folder and the second folder is established based on attributes of the folders or order of use of the folders; and an association relationship between the first folder and the first application program is established based on attributes of the folder and the application program or order of use of the folder and the application program.

15. The terminal according to claim 14, wherein a manner of establishing, by the processor, the association relationship between the first folder and the second folder based on order of use of the folders or establishing the association relationship between the first folder and the first application program comprises:
sorting folders and application programs in a preset first list in descending order or ascending order of use frequency of the folders and the application programs to obtain a first list; and obtaining, after sorting based on use frequency and use time of folders and application programs, a second list of folders and application programs used in each preset time period, wherein sorting order of the folders and the application programs in the second list corresponding to each time period satisfies first order, and the first order is descending order or ascending order of use frequency of the folders and the application programs; wherein
a position relationship between the folders and the application programs in the first list and a position relationship between the folders and the application programs in the second list are both used to indicate association relationships between the folders or between the folders and the application programs.

16. The terminal according to claim 14, wherein a manner of establishing, by the processor, the association relationship between the first folder and the second folder based on order of use of the folders or establishing the association relationship between the first folder and the first application program comprises:
obtaining a first chart, wherein the first chart comprises folders and application programs, and weighted values between every two folders, between every two application programs, and between one folder and one application program are all infinite; and performing training on the weighted values between every two folders, between every two application programs, and between one folder and one application program in the first chart by using a preset algorithm and by using a quantity of use times, use time, and order of use of folders and application programs in a preset time period as input parameters, to obtain a second chart; wherein
weighted values between every two folders, between every two application programs, and between one folder and one application program in the second chart are used to indicate association relationships between the folders or between the folders and the application programs.

17. The terminal according to claim 13, wherein a manner of obtaining, by the processor, the second folder or the first application program, or the second folder and the first application program displayed on the second display interface comprises:
determining whether the first folder is associated with any folder or application program, or associated with any folder and application program; and if determining that the first folder is associated with a folder or an application program or associated with a folder and an application program, obtaining the folder or the application program associated with the first folder or the folder and the application program associated therewith, wherein the second folder is the folder associated with the first folder, and the first application program is the application program associated with the first folder; or if determining that the first folder is not associated with any folder or application program or not associated with any folder and application program, detecting whether any folder or application program or folder and application program are displayed on the first display interface; and if detecting that a folder or an application program or a folder and an application program are displayed on the first display interface, obtaining the folder or the application program or the folder and the application program displayed on the first display interface, wherein the second folder is the folder displayed on the first display interface, and the first application program is the application program displayed on the first display interface.

18. The terminal according to claim 13, wherein a manner of obtaining, by the processor, the second folder or the first application program, or the second folder and the first application program displayed on the second display interface comprises:
detecting whether any folder or application program or folder and application program are displayed on the first display interface; and if detecting that a folder or an application program or a folder and an application program are displayed on the first display interface, obtaining the folder or the application program or the folder and the application program displayed on the first display interface, wherein the second folder is the folder displayed on the first display interface, and the first application program is the application program displayed on the first display interface; or if detecting that no folder is displayed, or no application program is displayed, or no folder and application program are displayed on the first display interface, determining whether the first folder is associated with any folder or application program or associated with any folder and application program; and if determining that the first folder is associated with a folder, or associated with an application program, or associated with a folder and an application program, obtaining the folder or the application program associated with the first folder or the folder and the application program associated therewith, wherein the second folder is the folder associated with the first folder, and the first application program is the application program associated with the first folder.

19. The terminal according to claim 17 or 18, wherein a manner of determining, by the processor, whether the first folder is associated with any folder or application program or associated with any folder and application program comprises:
searching a prestored first list to obtain folders or application programs in positions before and after the first folder in the first list; obtaining, based on use time of the first folder, a second list corresponding to the use time of the first folder; determining whether the second list comprises a name of the first folder; and if determining that the second list does not comprise the name of the first folder, using the folders or the application programs in the positions before and after the first folder in the first list as folders or application programs associated with the first folder or as folders and application programs associated therewith; or if determining that the second list comprises the name of the first folder, obtaining folders or application programs in positions before and after the first folder in the second list; determining whether the folders or the application programs in the positions before and after the first folder in the second list and the folders or the application programs in the positions before and after the first folder in the second list comprise any same folder or application program; and
if determining that the folders or the application programs in the positions before and after the first folder in the second list and the folders or the application programs in the positions before and after the first folder in the first list do not comprise any same folder or application program, determining that the first folder is not associated with any folder or application program or not associated with any folder and application program; or if determining that the folders or the application programs in the positions before and after the first folder in the second list and the folders or the application programs in the positions before and after the first folder in the first list comprise a same folder or application program, using the same folder and application program as a folder or an application program associated with the first folder or as a folder and an application program associated therewith.

20. The terminal according to claim 17 or 18, wherein a manner of determining whether the first folder is associated with any folder or application program or associated with any folder and application program comprises:
searching a prestored chart; determining whether a weighted value between the first folder and any folder or application program or folder and application program in the chart is less than a threshold; and
if determining that a weighted value between the first folder and a folder or an application program in the chart is less than the threshold, using the folder or the application program whose weighted value with the first folder is less than the threshold in the chart as a folder or an application program associated with the first folder; or if determining that a weighted value between the first folder and none of folders or application programs in the chart is less than the threshold, determining that the first folder is not associated with any folder or application program.

21. The terminal according to any one of claims 12 to 20, wherein the processor is further configured to:
when a trigger operation is input on the second display interface, switch from the second display interface to a third display interface; wherein
when the trigger operation is used to trigger the application program comprised in the first folder or the first application program, the third display interface is a start interface of the triggered application program, or when the trigger operation is used to trigger the second folder, an icon of an application program comprised in the second folder is displayed on the third display interface.

22. The terminal according to any one of claims 12 to 20, wherein the processor is further configured to:
when a trigger operation is input in a blank area on the second display interface or a return key is triggered, switch from the second display interface to the first display interface.
